# EUROPEAN PATENT SPECIFICATION

(11) **EP 2 121 412 B1**
(45) Date of publication and mention of the grant of the patent: **20.11.2013**
(21) Application number: 08712810.4
(22) Date of filing: 15.02.2008
(51) Int. Cl.: B62D 1/184, B62D 1/18, B62D 1/187

(54) **STEERING COLUMN FOR A VEHICLE**
LENKSÄULE FÜR EIN FAHRZEUG
COLONNE DE DIRECTION POUR UN VEHICULE

(30) Priority: 22.02.2007 SE 0700437
(43) Date of publication of application: 25.11.2009
(73) Proprietor: Scania CV AB (PUBL), 151 87 Södertälje (SE)
(72) Inventor: KARLSSON, Teddy, S-Hölö 153 92 (SE)
(86) International application number: PCT/SE2008/050180
(87) International publication number: WO 2008/103120

(56) References cited:
- EP-A1- 1 679 244
- EP-A2- 1 431 100
- EP-A2- 1 431 100
- US-A- 4 793 204
- US-A- 5 363 716
- US-A- 5 439 252
- US-A- 6 036 228
- US-A1- 2006 266 152
- US-B1- 6 189 405
- US-B1- 6 460 427

## Description

### TECHNICAL FIELD

The invention relates to a steering column arrangement for a vehicle comprising a steering column housing supported for movement relative to a cab structure, a steering wheel shaft housing supported for tilting relative to the steering column housing, and a locking mechanism for releasing and locking the movability and the tiltability of the steering column housing during setting of the steering column.

### BACKGROUND

A known such steering column arrangement according to EP 1431100 A2 is provided with separate actuators for setting and for locking and releasing both the longitudinal state and the tilt state. In the case of that steering column arrangement, the position of an instrument panel is also set at the same time.

In the case of a known manually settable such steering column arrangement referred to in US 5 363 716 the movability and the tiltability are locked and released separately by a single manual operating means which at an extreme position releases the movability, at an opposite extreme position releases the tiltability and at a normal intermediate position locks both the movability and the tiltability.

### SUMMARY OF THE INVENTION

An object of the present invention is to provide a simple and space-saving configuration which by a common adjusting mechanism can at the same time lock or release both the movability and the tiltability of the steering column.

This is achieved by the features indicated in the claims set out below.

According to the invention, the steering column arrangement comprises a first lever provided with a first locking means and supported in the steering column housing for pivoting between a locking position and a releasing position. In the locking position the first locking means is in engagement with the cab structure to prevent longitudinal movement of the steering column housing. In the releasing position the first locking means is out of engagement with the cab structure in order to allow movement of the steering column housing. The locking mechanism has also a second lever provided with a second locking means and likewise supported in the steering column housing for pivoting between a locking position and a releasing position. In the locking position the second locking means is in engagement with the steering wheel shaft housing to prevent tilt movement of the steering wheel shaft housing. In the releasing position the second locking means is out of engagement with the steering wheel shaft housing in order to allow tilt movement of the steering wheel shaft housing (as disclosed in US 6 460 427). In addition, the operating end of each of the first and second levers is connected to a common articulation for pivoting the levers between the locking position and the releasing position.

Such a jointly operable lever arrangement makes it possible for the steering column to be acted upon a single adjusting mechanism for totally simultaneous setting of both the longitudinal and the tilt positions of the steering column.

According to an embodiment of the invention, the adjusting mechanism is a pneumatic actuator.

According to another embodiment, the common articulation is urged towards said locking position by a spring, thereby making it possible to use, for example, an uncomplicated single-acting pneumatic cylinder as actuator to the releasing position.

The reversion of the locking mechanism from the released state to the locked state may be made self-acting if the pressure line to the pneumatic actuator is provided with a constricted outlet to atmosphere.

Other features and advantages of the invention are indicated by the claims and the following description of embodiment examples.

### BRIEF DESCRIPTION OF THE DRAWINGS

FIG. 1 is a schematic side view of an upper steering column according to the invention;
FIGS. 2 and 3 are schematic side views of a locking mechanism of the upper steering column in FIG. 1 in a locked state and a released state respectively.

### DETAILED DESCRIPTION OF EMBODIMENT EXAMPLES

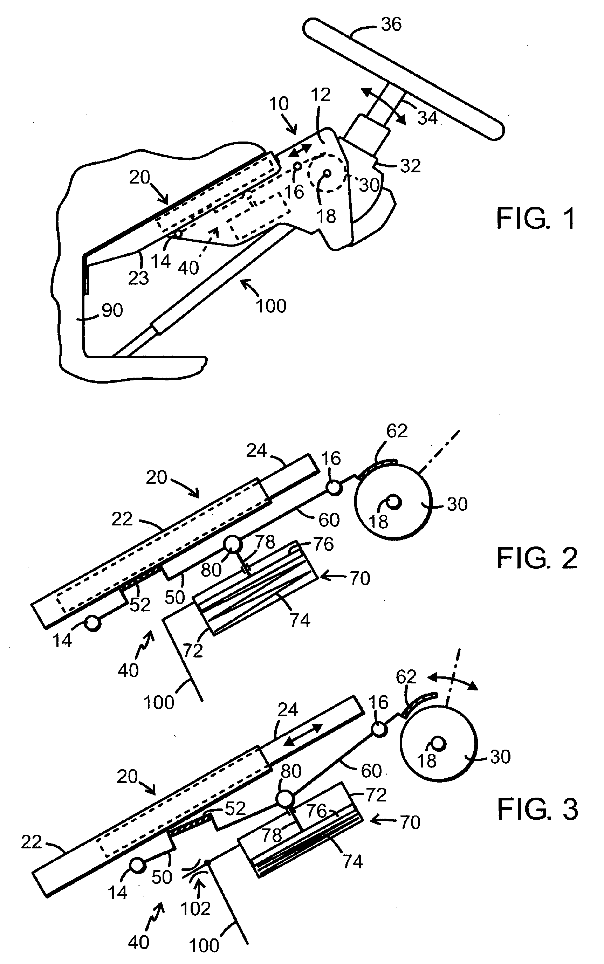

The schematic drawing in FIG. 1 depicts an upper steering column 10 with a steering column housing 12 which is connected in a longitudinally movable manner to a cab structure 90 for a vehicle via a longitudinal guide 20. The housing 12 also supports for tilting about a horizontal axis 18 a steering wheel shaft housing 32 for a steering wheel shaft 34 for a steering wheel 36. FIG. 1 also depicts a telescopic lower steering column 100 which has its upper end connected in a conventional manner to the steering wheel shaft 34 via an undepicted universal coupling and has its lower end connected to an undepicted steering gear.

The arrangement described above thus allows longitudinal and tilt movements of the upper steering column 10 in the direction indicated by the arrows in FIG. 1 with the object of setting the steering wheel 36 in a desired position for a driver of the vehicle.

The upper steering column 10 also has a locking mechanism 40 for locking and releasing the longitudinal and tilt movements of the upper steering column 10.

In the embodiment depicted in FIGS. 2 and 3, the locking mechanism 40 comprises a pair of handles or levers 50, 60 each supported in the steering column housing 12 for pivoting at their respective articulations 14 and 16.

A first lever 50 of the levers 50, 60 supports a first locking means 52 adapted to being put into/out of engagement with a stationary element 22 of the longitudinal guide 20 which may form part of the cab structure 90. The stationary element 22 may be firmly connected to the cab structure 90 by a fastening element 23 such as a bent steel plate. A movable portion 24 of the longitudinal guide 20 is firmly connected to the steering column housing 12 in a manner not depicted in detail.

A second lever 60 of the levers 50, 60 supports a second locking means 62 adapted to being put into/out of engagement with a rotatable portion 30 of the tiltable steering wheel shaft housing 32. In the example depicted, the rotatable portion 30 is a circular disc or a tilt wheel fastened firmly to the steering wheel shaft housing 32. For reasons of symmetry, a disc may be provided on each side of steering wheel shaft housing 32 (not depicted), in which case the handle 60 may of course be provided with two locking means 62. In corresponding undepicted manner, the handle 50 may also be provided with two locking means 52.

The locking means 52, 62 may be configured in various undepicted ways. They may for example be made of rubber material in order to lock by frictional surface engagement. They may also take the form of keys/keyways for locking engagement with keyways/keys. They may also take the form of eccentrics supported for pivoting at respective articulations 14, 16 for locking by eccentric action.

As may also be seen in FIGS. 2 and 3, each of the levers 50, 60 has an operating end which is linked to that of the other by an articulation 80 which is acted upon by an adjusting mechanism 70. Although the adjusting mechanism may be operable manually, it comprises in the example depicted an actuator 70. Although the actuator 70 may for example be of an electrical or hydraulic type, it is in the example depicted a pneumatic actuator comprising a pneumatic cylinder 72 with a piston 76 and a piston rod or operating rod 78. The cylinder 72 is firmly connected, in a manner not depicted in detail, to the steering column housing 12. The outer end of the piston rod 78 is connected to the articulation 80.

In the locked normal state according to FIG. 2, the two levers 50, 60 of the adjusting mechanism 40 are urged towards their locking positions by a compression spring 74 in the cylinder 72. The compression spring 74 pushes the piston 76 to an extreme position at which the piston rod 78 is extended and, via the common articulation 80, maintains the levers 50, 60 in their locking positions. The two housings 12, 32 (FIG. 1) will thus be locked in their previously set positions.

In the released setting state according to FIG. 3, the two levers 50, 60 of the adjusting mechanism 40 are urged towards their releasing positions as a result of the pneumatic cylinder 72 being pressurised via a compressed airline 100. The pressure from the line 100 pushes the piston to an extreme position at which the piston rod 78 is drawn back and, via the common articulation, maintains the levers 50, 60 in their releasing positions. The two housings 12, 32 (FIG. 1) will thus be released for setting of their longitudinal and tilt positions respectively.

The actuator 70 is with advantage provided, in an undepicted manner, with delayed automatic reversion to the normal locked state in FIG. 2. If the actuator is the pneumatic actuator 70 depicted, this may be achieved by a constriction 102 (FIG. 3) in an outlet to atmosphere of the line 100. The constriction 102 will allow the pressure to decrease progressively in the cylinder 72 so that the piston 76, urged by the spring 74, reverts to the locked state according to FIG. 2 after sufficient time, e.g. a few seconds, to allow the driver of the vehicle to set the upper steering column to a desired new longitudinal and tilt position.

The description set out above is primarily intended to facilitate comprehension and no limitations of the invention are to be inferred therefrom.

## Claims

1. A steering column arrangement for a vehicle comprising
a steering column (10);
a steering column housing (12) supported for movement relative to a cab structure (90);
a steering wheel shaft housing (32) supported for tilting relative to the steering column housing (12); and
a locking mechanism (40) for releasing and locking the movability of the steering column housing (12) and the tiltability of the steering wheel shaft housing (32) during setting of the steering column (10);
the locking mechanism (40) comprising
a first lever (50) provided with a first locking means (52) and supported in the steering column housing (12) for pivoting between a locking position in which the first locking means (52) is in engagement with the cab structure (90) to prevent longitudinal movement of the steering column housing (12) and a releasing position in which the first locking means is out of engagement with the cab structure (90) in order to allow movement of the steering column housing (12),
a second lever (60) provided with a second locking means (62) and supported in the steering column housing (12) for pivoting between a locking position in which the second locking means (62) is in engagement with the steering wheel shaft housing (32) to prevent tilt movement of the steering wheel shaft housing (32) and a releasing position in which the second locking means is out of engagement with the steering wheel shaft housing (32) in order to allow tilt movement of the steering wheel shaft housing (32),
**characterised in that**
an operating end of each of the first and second levers (50, 60) is connected at a common articulation (80) for pivoting of the levers between the locking and releasing positions.

2. A steering column according to claim 1, in which the common articulation (80) is connected to an adjusting mechanism (70).

3. A steering column according to claim 1 or 2, in which the adjusting mechanism comprises a pneumatic actuator (70).

4. A steering column according to any one of the foregoing claims, in which the common articulation (80) is urged towards said locking positions by a spring (74).

5. A steering column according to claim 4, in which the pneumatic actuator (70) comprises an outlet with a constriction (102) to atmosphere for effecting delayed self-acting reversion of the actuator (70) from the released state to the locked state.

6. A steering column according to any one of the foregoing claims, in which the first locking means (52) engages with the cab structure (90) via a fixed portion (22; 23) of a longitudinal guide (20).

7. A steering column according to any one of the foregoing claims, in which the second locking means (62) engages with the steering wheel shaft housing (32) via a disc (30) which is rotatable together with tilt movements of the steering wheel shaft housing.

## Patentansprüche

1. Lenksäulenanordnung für ein Fahrzeug, umfassend
eine Lenksäule (10);
ein Lenksäulengehäuse (12), das für eine Relativbewegung bezüglich einer Fahrerhausstruktur (90) gelagert ist;
ein Lenkradachsengehäuse (32), das für eine Relativverkippung bezüglich des Lenksäulengehäuses (12) gelagert ist; und
einen Blockiermechanismus (40) zum Freigeben und Blockieren der Bewegbarkeit des Lenksäulengehäuses (12) und der Verkippbarkeit des Lenkradachsengehäuses (32) beim Einstellen der Lenksäule (12);
wobei der Blockiermechanismus (40) folgendes umfasst:
einen ersten Hebel (50), der ein erstes Blockiermittel (52) aufweist und in dem Lenksäulengehäuse (12) zum Verschwenken zwischen einer Blockierposition, in der das erste Blockiermittel (52) im Eingriff mit der Fahrerhausstruktur (90) zum Verhindern einer Längsbewegung des Lenksäulengehäuses (12) steht, und einer Freigabeposition gelagert ist, in der das erste Blockiermittel nicht im Eingriff mit der Fahrerhausstruktur (90) steht, um eine Bewegung des Lenksäulengehäuses (12) zu ermöglichen,
einen zweiten Hebel (60), der ein zweites Blockiermittel (62) aufweist und in dem Lenksäulengehäuse (12) zum Verschwenken zwischen einer Blockierposition, in der das zweite Blockiermittel (62) im Eingriff mit dem Lenkradachsengehäuse (32) zum Verhindern einer Kippbewegung des Lenkradachsengehäuse (32) steht, und einer Freigabeposition gelagert ist, in der das zweite Blockiermittel nicht im Eingriff mit dem Lenkradachsengehäuse (32) steht, um eine Kippbewegung des Lenkradachsengehäuses (32) zu ermöglichen,
**dadurch gekennzeichnet, dass** ein Betätigungsende von jedem der ersten und zweiten Hebel (50, 60) in einem gemeinsamen Gelenk (80) zum Verschwenken der Hebel zwischen den Blockier- und Freigabepositionen verbunden ist.

2. Lenksäule gemäß Anspruch 1,
bei der das gemeinsame Gelenk (80) mit einem Anpassungsmechanismus (70) verbunden ist.

3. Lenksäule gemäß Anspruch 1 oder 2,
bei der der Anpassungsmechanismus einen pneumatischen Aktuator (70) umfasst.

4. Lenksäule gemäß einem der vorangehenden Ansprüche,
bei der das gemeinsame Gelenk (80) von einer Feder (74) in Richtung der Blockierposition gedrängt wird.

5. Lenksäule gemäß Anspruch 4,
bei der der pneumatische Aktuator (70) einen Auslass mit einer Verengung (102) zur Atmosphäre umfasst, um eine verzögerte, selbsttätige Rückkehr des Aktuators (70) von dem freigegebenen Zustand zu dem blockierten Zustand zu bewirken.

6. Lenksäule gemäß einem der vorangehenden Ansprüche,
bei der das erste Blockiermittel (52) mit der Fahrerhausstruktur (90) über einen festgelegten Abschnitt (22; 23) einer Längsführung (20) in einen Eingriff gelangt.

7. Lenksäule gemäß einem der vorangehenden Ansprüche,
bei der das zweite Blockiermittel (62) mit dem Lenkradachsengehäuse (32) über eine Scheibe (30) in einen Eingriff gelangt, die gemeinsam mit Kippbewegungen des Lenkradachsengehäuses rotierbar ist.

## Revendications

1. Agencement de colonne de direction (10) pour véhicule, comprenant une colonne de direction (10) ;
un carter de colonne de direction (32) supporté de manière à pouvoir se déplacer par rapport à une structure de cabine (90) ;
un carter d'arbre de volant de direction (32) supporté de manière à pouvoir s'incliner par rapport au carter de colonne de direction (12) ; et
un mécanisme de blocage (40) servant à libérer et à bloquer la mobilité du carter de colonne de direction (12) et la possibilité d'incliner le carter d'arbre de volant de direction (32) pendant le réglage de la colonne de direction (10) ;
le mécanisme de blocage (40) comprenant
un premier levier (50) muni d'un premier moyen de blocage (52) et supporté dans le carter de colonne de direction (12) de manière à pouvoir pivoter entre une position de blocage, dans laquelle le premier moyen de blocage (52) est en prise avec la structure de cabine (90) pour interdire le déplacement longitudinal du carter de colonne de direction (12), et une position de libération, dans laquelle le premier moyen de blocage est hors de prise de la structure de cabine (90) afin d'autoriser le déplacement du carter de colonne direction (12),
un second levier (60) équipé d'un second moyen de blocage (62) et supporté dans le carter de colonne de direction (12) de manière à pouvoir pivoter entre une position de blocage, dans laquelle le second moyen de blocage (62) est en prise avec le carter d'arbre de volant de direction (32) pour interdire le mouvement d'inclinaison du carter d'arbre de volant de direction (32), et une position de libération dans laquelle le second moyen de blocage est hors de prise du carter d'arbre de volant de direction (32) afin d'autoriser le mouvement d'inclinaison du carter d'arbre de volant de direction (32),
**caractérisé en ce qu'**une extrémité de commande de chacun des premier et second leviers (50, 60) est reliée à une articulation commune (80) pour permettre aux leviers de pivoter entre les positions de blocage et de libération.

2. Colonne de direction selon la revendication 1, dans laquelle l'articulation commune (80) est reliée à un mécanisme de réglage (70).

3. Colonne de direction selon la revendication 1 ou 2, dans laquelle le mécanisme de réglage comprend un actionneur pneumatique (70).

4. Colonne de direction selon l'une quelconque des revendications précédentes, dans laquelle l'articulation commune (80) est rappelée vers lesdites positions de blocage par un ressort (74).

5. Colonne de direction selon la revendication 4, dans laquelle l'actionneur pneumatique (70) comprend une sortie munie d'un étranglement (102) donnant sur l'atmosphère, destinée à assurer un retour automatique temporisé de l'actionneur (70) de l'état libéré à l'état bloqué.

6. Colonne de direction selon l'une quelconque des revendications précédentes, dans laquelle le premier moyen de blocage (52) entre en prise avec la structure de cabine (90) par l'intermédiaire d'une partie fixe (22 ; 23) d'un guide longitudinal (20).

7. Colonne de direction selon l'une quelconque des revendications précédentes, dans laquelle ledit second moyen de blocage (62) entre en prise avec le carter d'arbre de volant de direction (32) par l'intermédiaire d'un disque (30) qui peut tourner en accompagnant de petits mouvements d'inclinaison du carter d'arbre de volant de direction.
